# EUROPÄISCHE PATENTSCHRIFT

(11) **EP 2 354 615 B1**
(45) Veröffentlichungstag und Bekanntmachung des Hinweises auf die Patenterteilung: **22.08.2012**
(21) Anmeldenummer: 10152807.3
(22) Anmeldetag: 05.02.2010
(51) Int. Cl.: F16L 21/08, F16L 37/08, F16B 2/24

(54) **Sicherungsvorrichtung einer Fluidleitungsverbindung**
Safety device for a fluid conduit
Dispositif de sécurisation d'un raccordement de conduite de fluide

(43) Veröffentlichungstag der Anmeldung: 10.08.2011
(73) Patentinhaber: Centrotherm Systemtechnik GmbH, 59929 Brilon (DE)
(72) Erfinder: Richter, Hans-Jürgen, 34431, Marsberg (DE)
(74) Vertreter: Zenz

(56) Entgegenhaltungen:
- EP-A1- 1 416 214
- WO-A1-03/083345
- GB-A- 1 311 046
- GB-A- 1 361 404

## Beschreibung

Die Erfindung betrifft eine Muffenverbindung, die eine Sicherungsvorrichtung zur axialen Verbindung eines muffenförmigen Endabschnitts eines ersten Fluidleitungsteils mit einem als Spitzende ausgebildeten Endabschnitt eines zweiten Fluidleitungsteils aufweist.

Der Ausdruck "Fluidleitungsteil" umfasst im Sinne der Erfindung jegliche Arten von rohrartigen Formstücken oder Formteilen in Rohrleitungen, wie zum Beispiel Rohre, Rohrbögen, T-Stücke, Y-Stücke, Muffen, U-Rohre, Rohrabzweigungen, Reduzierungen bzw. Reduktionen, Rohrstutzen und dergleichen. Nachstehende, auf Rohre, Rohleitungen und Rohrverbindungen bezogene Ausführungen sind daher nicht einschränkend auf Rohre sondern allgemein auf vorstehend genannte Arten von Fluidleitungsteilen und deren Verbindungen zu verstehen. Ebenso umfasst im Sinne der Erfindung der Begriff "Fluid" sowohl Gase als auch Flüssigkeiten.

Es ist allgemein bekannt, Endabschnitte von Fluidleitungsteilen, wie beispielsweise von Rohren, zur Ausbildung einer Fluidleitung bzw. Rohrleitung mittels Schraub-, Flansch-, Klemm- oder Muffenverbindungen miteinander zu verbinden.

Bei Schraubverbindungen weisen die Endabschnitte der Rohre bzw. Fluidleitungsteile ein Gewinde auf, wodurch die Endabschnitte der Rohre sicher miteinander verbunden werden - können. Allerdings schränken solche Schraubverbindungen die Flexibilität der Verlegung von Rohren in einem gewissen Maße ein und erfordern darüber hinaus zeitaufwendige Montagevorgänge. Daher werden solche Schraubverbindungen üblicherweise lediglich bei Rohren mit kleinen Nennweiten, allerdings für Nenndrücke bis zu mehreren 100 bar eingesetzt.

Bei größeren Nennweiten der Rohre bzw. Fluidleitungsteile kommen Flanschverbindungen zum Einsatz, um Rohrabschnitte dicht, aber lösbar miteinander zu verbinden. Für die Dichtheit der Flanschverbindung ist der Anpressdruck der Dichtflächen auf die dazwischen liegende Dichtung entscheidend. Der Anpressdruck wird meist mit Schrauben aufgebracht, die durch Bohrungen in den Flanschblättern gesteckt sind. Diese Flanschblätter bzw. Flansche werden in der Regel mit dem Rohr verschweißt, was aufwändige Schweißarbeiten nach sich zieht.

Bei Klemmverbindungen sind die zu verbindenden Endabschnitte der Rohre bzw. Fluidleitungsteile von einem Klemmkörper vollständig umgeben. Mittels einer oder mehrerer Schraubenverbindungen wird dann der Klemmkörper zusammengezogen und klemmt so die zu verbindenden Endabschnitte der Rohre ein, wobei der zu verklemmende Bereich nahezu 360° umfasst und die Flächenpressung zwischen Rohr und Klemmkörper sich gleichmäßig aufbaut. Dabei muss das zulässige Anzugsmoment der Schrauben beachtet werden, um den erforderlichen Reibschluss zwischen Klemmkörper und den Rohren zu erzielen, so dass die Dichtigkeit der Verbindung gewährleistet ist.

Aus der EP 1 416 214 A1 ist ein nach Art einer Sicherungsvorrichtung ausgebildetes Verbindungselement zur Verbindung eines Anschlussrohrstückes mit einer Anschlussöffnung eines Ventilkörpers bekannt. Die blechzungenartig ausgebildete Sicherungsvorrichtung weist eine Durchgangsöffnung auf, durch die das Anschlussrohrstück hindurch einschiebbar ist. Ferner umfasst die Sicherungsvorrichtung ein als Halteelement dienendes Verbindungselement, das in eine in dem Ventilkörper ausgebildete Nut eingreift.

Darüber hinaus sind aus dem Stand der Technik Muffenverbindungen zur unterbrechungsfreien Verbindung von Rohren bzw. Fluidleitungsteilen bekannt. Solche Muffenverbindungen werden sowohl für im Wesentlichen drucklose Rohrleitungen, wie zum Beispiel Kanalrohre oder Kabelschutzrohre, als auch für mit Druck beaufschlagte Rohrleitungen, wie zum Beispiel Leitungen für Gas, Abgas, Trinkwasser oder Abwasser, eingesetzt. Die Muffenverbindung weist ein Muffenelement auf, das beispielsweise durch Aufweitung eines Endabschnitts eines Rohres hergestellt werden kann. Alternativ kann das Muffenelement als separate Überschiebemuffe ausgebildet und an dem Endabschnitt des Rohres montiert sein. Diese Muffenverbindung wird auch als sogenannte Steckmuffenverbindung bezeichnet, bei welcher ein freier Endabschnitt eines Rohres in das Muffenelement eingesteckt wird, wobei der freie Endabschnitt des Rohres im Allgemeinen als Spitzende bezeichnet wird. Zur Abdichtung der Muffenverbindung ist üblicherweise ein Dichtring vorgesehen, der in einer in der Innenwandung des Muffenelements ausgebildeten Umfangsnut eingesetzt ist.

Nachteilig bei diesen Muffenverbindungen ist, dass sie meist nicht selbstsichernd ausgebildet sind und nicht dazu ausgelegt sind, Zugkräften standzuhalten, so dass die Gefahr besteht, dass die zu verbindenden Rohre bzw. Fluidleitungsteile bei wirksam werdender Zugbelastung auseinander gleiten und die Rohrverbindung bzw. Fluidleitungsverbindung lösen.

Um dies zu verhindern sind Steckmuffenverbindungen bekannt, bei denen zum Zwecke der Sicherung der Rohrverbindung vor dem Dichtring in einer besonderen, rundum laufenden Ausnehmung ein ringförmiges Klemmelement angeordnet ist, das unter der Wirkung der sich zum Muffeneingang hin verengenden Ausnehmung gegen das Spitzende gedrückt wird und dieses durch Reibschluss am Auswandern aus der Muffe hindert. Der Klemmring kann hierbei besonders aufgeraut oder verzahnt sein. Nachteilig ist jedoch, dass eine optische Kontrolle der Sicherung in Form des Klemmrings nicht möglich ist, da der Klemmring im Inneren der Rohrverbindung zwischen den Rohren angeordnet ist und eine Kontrolle nur möglich ist, wenn die Rohrverbindung gelöst wird.

Die Verwendung eines solchen Klemmelements weist ferner den Nachteil auf, dass das Klemmelement nicht sofort, sondern erst nach einer gewissen Anlaufstrecke zur Wirkung kommt, so dass die Dichtigkeit der Verbindung nicht in jedem Fall gewährleistet ist. Auch halten solche meist elastisch ausgebildeten Klemmelemente nur einer gewissen Zugkraft Stand und sind nicht für größere Zugbelastungen geeignet. Somit besteht insbesondere bei druckbelasteten Muffenverbindungen die Gefahr, dass sich die Muffenverbindung unter Zugbelastung löst. Darüber hinaus bestehen in einigen Ländern strenge und vorgeschriebene Anforderungen, dass die Muffenverbindung beispielsweise einer Zugbelastung von mehreren hundert Newton sowie einem auf die Verbindung wirkenden, vorgegebenen Drehmoment Stand halten muss.

Daher besteht bei solchen Fluidleitungsverbindungen das Bedürfnis, dass eine Sicherung vorgesehen ist, die hohen Zugkräften standhält, so dass ein Auseinandergleiten der Fluidleitungsteile verhindert wird.

Der Erfindung liegt die Aufgabe zugrunde, eine Lösung zu schaffen, die auf konstruktiv einfache Weise und kostengünstig eine vereinfachte und verbesserte Sicherung zur axialen Verbindung von Endabschnitten von Fluidleitungsteilen bereitstellt, die darüber hinaus leicht montiert und demontiert werden kann und nach Anbringung sofort wirksam ist.

Diese Aufgabe wird erfindungsgemäß gelöst durch eine Muffenverbindung, die ein erstes Fluidleitungsteil mit einem muffenförmigen Endabschnitt, ein zweites Fluidleitungsteil mit einem als Spitzende ausgebildeten Endabschnitt und eine Sicherungsvorrichtung aufweist. Der als Spitzende ausgebildete Endabschnitt des zweiten Fluidleitungsteils ist in den muffenförmigen Endabschnitt des ersten Fluidleitungsteils einsteckbar. Der muffenförmige Endabschnitt des ersten Fluidleitungsteils weist an seinem Außenumfang wenigstens einen umfangsmäßig zumindest abschnittsweise ausgebildeten kragenförmigen Vorsprung auf. Die Sicherungsvorrichtung umfasst einen in radialer Richtung ringförmig ausgebildeten Klemmkörper mit einer Durchgangsöffnung, die eine an den Außendurchmesser des zweiten Fluidleitungsteils angepasste Innenkontur zum Einschieben des zweiten Fluidleitungsteils aufweist. In Zusammenbauanordnung der Fluidleitungsverbindung ist der Endabschnitt des zweiten Fluidleitungsteils in den Endabschnitt des ersten Fluidleitungsteils eingesteckt, wobei die Sicherungsvorrichtung über die Außenwandung des zweiten Fluidleitungsteils geschoben und in Nähe des Endabschnitts des ersten Fluidleitungsteils angeordnet ist. An dem ringförmig ausgebildeten Klemmkörper ist wenigstens ein sich in axialer Richtung erstreckendes und hakenförmig ausgebildetes Halteelement zum Hintergreifen des auf dem Endabschnitt des ersten Fluidleitungsteils ausgebildeten Vorsprungs angeformt. Das wenigstens eine Halteelement hintergreift in Zusammenbauposition der Fluidleitungsverbindung den Vorsprung derart, dass der ringförmig ausgebildete Klemmkörper abweichend von einer senkrecht zur axialen Richtung weisenden, schiefen oder schrägen Stellung verkantet und formschlüssig an der Außenwandung des zweiten Fluidleitungsteils anliegt, wobei an dem Klemmkörper wenigstens ein stegförmig ausgebildeter und sich in axialer Richtung erstreckender Abstandshalter angeformt ist, der in Einbauposition der Sicherungsvorrichtung bzw. in Zusammenbauposition der Muffenverbindung den kragenförmigen Vorsprung des Endabschnitts des ersten Fluidleitungsteils abstützt, wobei das wenigstens eine Halteelement und der wenigstens eine Abstandshalter sich in die gleiche axiale Richtung erstrecken, und wobei die axiale Breite des kragenförmigen Vorsprungs größer ist als der Betrag der Differenz der axialen Längen des wenigstens einen Halteelements und des wenigstens einen Abstandshalters.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, mit welcher auf konstruktiv einfache Weise eine Erhöhung der Zugfestigkeit für Fluidleitungsverbindungen, wie beispielsweise Rohrverbindungen, nach Art einer Steckmuffenverbindung erzielt wird. Die Sicherungsvorrichtung dient der schnellen Verbindung von Endabschnitten von Fluidleitungsteilen, wie zum Beispiel von Rohren. Mit Hilfe der erfindungsgemäßen Sicherungsvorrichtung ist es nunmehr möglich, nicht nur eine zugfeste Fluidleitungsverbindung bzw. Rohrverbindung herzustellen, sondern diese auf einfache Weise auch wieder zu lösen. Durch die Schrägstellung der Sicherungsvorrichtung im montierten Zustand bzw. in Zusammenbauanordnung wird eine geringe Klemmung bzw. Vorklemmung des Klemmkörpers auf dem zweiten Fluidleitungsteil erreicht. Diese Klemmung bewirkt, dass sich die Sicherungsvorrichtung beim etwaigen Auseinandergleiten der Fluidleitungsverbindung immer weiter verkantet und somit letztendlich eine Art Selbsthemmung eintritt. Eine Ausrichtung des Abstandshalters und des Halteelements streng parallel zueinander ist nicht erforderlich. Dadurch, dass die axiale Breite des Vorsprungs größer ist als der Betrag der Differenz der axialen Längen des wenigstens einen Halteelements und des wenigstens einen Abstandshalters, wird eine kontrollierte Schrägstellung und gewisse Vorklemmung bzw. Verkantung der Sicherungsvorrichtung auf der Außenwandung des Fluidleitungsteils bewirkt. Die Montage der Sicherungsvorrichtung bzw. der Fluidleitungsverbindung kann manuell ohne Verwendung eines Werkzeuges auf zeitsparende Art und Weise erfolgen. Ferner unterliegt die Fluidleitungsverbindung keinem Einfluss eines Monteurs oder Handwerkers. Da die erfindungsgemäße Verbindung keine Schrauben, Flansche, Schellen oder dergleichen verwendet, muss auch kein einzuhaltendes Anzugsmoment der Schrauben beachtet werden. Die Kontrolle, ob die Fluidleitungsverbindung ordnungsgemäß errichtet und die Montage der Sicherungsvorrichtung korrekt erfolgt ist, kann mittels einfacher optischer Kontrolle durchgeführt werden. Durch die konstruktive Ausgestaltung der als Clip ausgebildeten Sicherungsvorrichtung ist es möglich, dass nur noch ein einziges Bauelement zur Verbindung von Endabschnitte zweier Fluidleitungsteile erforderlich ist, wodurch Materialkosten eingespart werden können. Außerdem ist eine einfache und schnellere Montage möglich, was ebenfalls zu einer Kostenreduktion führt. Somit wird durch die Erfindung eine axiale Sicherung ohne Zuhilfenahme eines mehrteiligen Sicherungsmittels realisiert.

Um die Klemmwirkung der Sicherungsvorrichtung auf dem Außenumfang des zweiten Fluidleitungsteils zu erhöhen, ist es zweckmäßig, dass der Klemmkörper - insbesondere in Zusammenbauposition der Fluidleitungsverbindung - mit einer gewissen Vorklemmung auf dem zweiten Fluidleitungsteil angeordnet ist. Zusätzlich zu dieser gewissen Vorklemmung sieht die Erfindung in Ausgestaltung vor, dass die Innenkontur der Durchgangsöffnung des Klemmkörpers scharfkantig oder als Reibfläche ausgebildet ist, um die Verklemmung oder Verkantung der Sicherungsvorrichtung auf der Außenwandung des Fluidleitungsteils zu erhöhen. Beispielsweise kann sich bei einer metallischen Ausbildung der Sicherungsvorrichtung die scharfkantig ausgebildete Innenkontur des Klemmkörpers in die Außenwandung eines Fluidleitungsteils aus beispielsweise Kunststoff leicht einschneiden, was die Klemmwirkung zusätzlich erhöht.

Denkbar ist es aber auch, die Sicherungsvorrichtung in einem einfachen Herstellungsprozess aus einem Kunststoffmaterial zu fertigen, wobei dann die Innenkontur der Durchgangsöffnung des Klemmkörpers als Reibfläche ausgebildet oder mit einem zusätzlichen als Reibfläche dienenden Bauteil versehen ist.

Ferner ist in alternativer Ausgestaltung der Erfindung vorgesehen, dass der Klemmkörper einen radial außen liegend umlaufenden bzw. umfangsmäßig außen rundum laufenden Steg aufweist, um die Formstabilität der Sicherungsvorrichtung zu erhöhen und ein Abgleiten sowie ein Umklappen des Klemmkörpers bei Auseinandergleiten der Endabschnitte der zu verbindenden Fluidleitungsteile unter Zugkrafteinwirkung zu unterbinden.

In Weiterbildung sieht die Erfindung vor, dass der wenigstens eine Abstandshalter im Wesentlichen auf der dem wenigstens einen Halteelement radial gegenüberliegenden Seite des Klemmkörpers angeformt ist. Denkbar ist es aber auch, den Abstandshalter an einer davon abweichenden Position anzuordnen und/oder mehrere Abstandshalter vorzusehen. Diese verschiedenen Ausgestaltungen sorgt dafür, dass die Sicherungsvorrichtung in ihrer Einbauposition bzw. in Zusammenbauanordnung der Fluidleitungsverbindung leicht verkantet auf dem zweiten Fluidleitungsteil angeordnet ist und eng an der Außenwandung des zweiten Fluidleitungsteils anliegt.

In Weiterbildung der Sicherungsvorrichtung und der Fluidleitungsverbindung sieht die Erfindung vor, dass die axiale Länge bzw. Erstreckung des wenigstens einen hakenförmig ausgebildeten Halteelements größer ist als die axiale Länge bzw. Erstreckung des wenigstens einen stegförmig ausgebildeten Abstandshalters. Diese Maßnahme unterstützt zusätzlich das Verklemmen bzw. Verkanten der Sicherungsvorrichtung auf dem zweiten Fluidleitungsteil, wobei sich der Abstandshalter in Einbauposition der Sicherungsvorrichtung auf dem Vorsprung des Endabschnitts des ersten Fluidleitungsteils abstützt, während das hakenförmig ausgebildete Halteelement einen an dem Endabschnitt des ersten Fluidleitungsteils ausgebildeten Vorsprung hintergreift. Hierbei kann es sich um den gleichen Vorsprung handeln, der umfangsmäßig rundum laufend an dem muffenförmig ausgebildeten Endabschnitt des Fluidleitungsteils ausgebildet ist. Denkbar ist es aber auch, dass zwei Vorsprünge am muffenförmigen Endabschnitt abschnittsweise an Umfang des Endabschnitts ausgebildet sind und deren Anordnung mit der Anordnung des Halteelements und des Abstandshalters korrespondiert.

Schließlich sieht die Erfindung in Ausgestaltung vor, dass in Zusammenbauanordnung der Muffenverbindung die Sicherungsvorrichtung in einem Winkel zwischen 5° und 10° zur senkrecht zur Axialrichtung der Fluidleitungsverbindung verlaufenden Achse verkantet mit dem zweiten Fluidleitungsteil auf dessen Außenwandung angeordnet ist. Dieser Winkelbereich sorgt für eine ausreichende Klemmwirkung, um ein Auseinandergleiten der Fluidleitungsteile zu verhindern. Denkbar ist aber auch, dass ein Winkel von kleiner 5° sowie ein Winkel von größer 10° verwendet werden kann, was beispielsweise unter anderem von den Durchmessern der zu verbindenden Fluidleitungsteile abhängt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weiter Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 eine Einzelteildarstellung einer erfindungsgemäßen Fluidleitungsverbindung in perspektivische Ansicht,
Figur 2 eine erste Ausführungsform einer erfindungsgemäßen Sicherungsvorrichtung,
Figur 3 eine zweite Ausführungsform einer erfindungsgemäßen Sicherungsvorrichtung,
Figur 4 eine dritte Ausführungsform einer erfindungsgemäßen Sicherungsvorrichtung,
Figur 5 die erfindungsgemäße Fluidleitungsverbindung vor der Anordnung der Sicherungsvorrichtung in ihrer Einbauposition,
Figur 6 die erfindungsgemäße Fluidleitungsverbindung in ihrer Zusammenbauanordnung,
Figur 7 die erfindungsgemäße Fluidleitungsverbindung in Zusammenbauposition in perspektivischer Ansicht und
Figur 8 die erfindungsgemäße Fluidleitungsverbindung in Zusammenbauposition in einer von Figur 7 abweichenden perspektivischen Ansicht.

Im konkreten Ausführungsbeispiel der vorliegenden Erfindung wird nachstehend eine Rohrverbindung beschrieben. Es versteht sich, dass die Erfindung nicht nur auf eine solche Rohrverbindung und eine diese Rohrverbindung fixierende Sicherungsvorrichtung beschränkt ist, sondern Verbindungen jeglicher Fluidleitungsteile bzw. Formteile/Formstücke, wie beispielsweise Rohre, Rohrbögen, T-Stücke, Y-Stücke, Muffen, U-Rohre, Rohrabzweigungen, Reduzierungen bzw. Reduktionen, Rohrstutzen und dergleichen, umfasst sind.

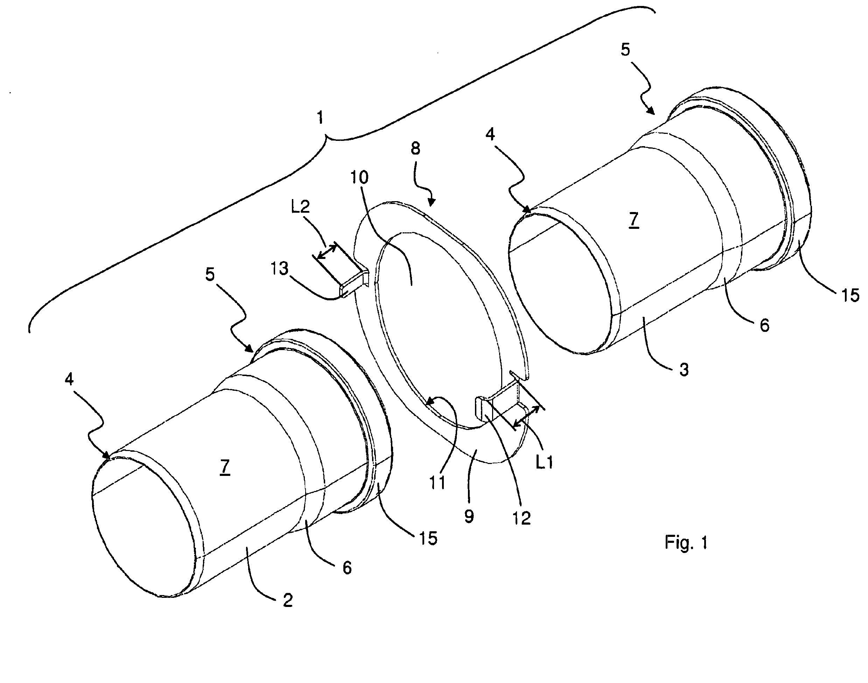

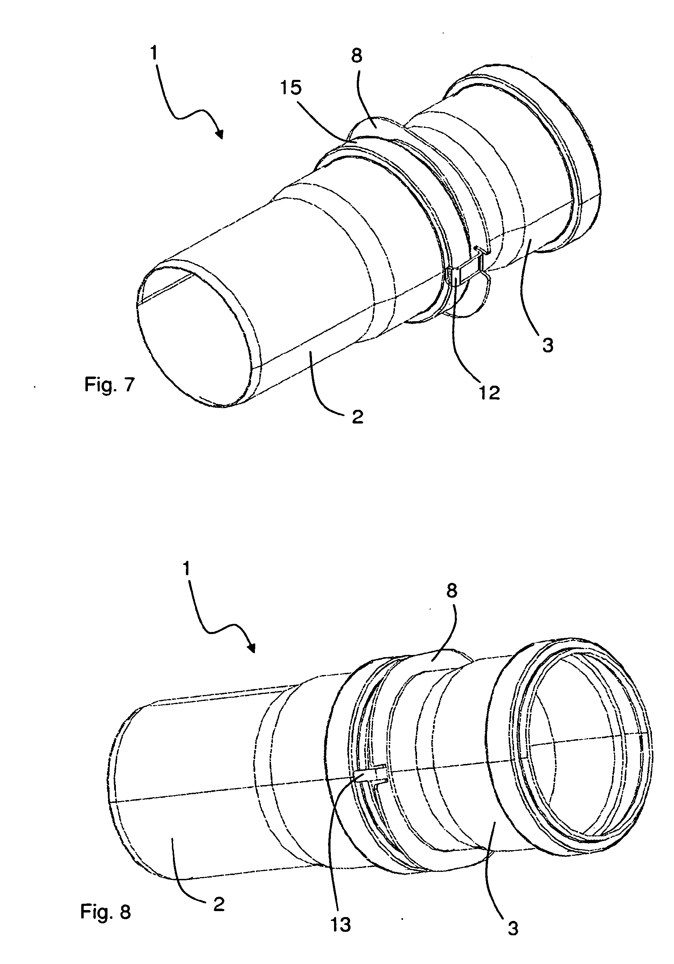

In den Figuren 1 und 5 bis 8 ist eine insgesamt mit 1 bezeichnete Rohrverbindung bzw. Rohrverbindungsanordnung gezeigt, welche die erfindungsgemäße Fluidleitungsverbindung darstellt. Die Fluidleitungsverbindung 1 bzw. Rohrverbindung 1 umfasst ein erstes Rohr bzw. Fluidleitungsteil 2 und ein zweites Rohr bzw. Fluidleitungsteil 3, die in dem dargestellten Ausführungsbeispiel beide kreiszylindrisch ausgeführt sind und aus Kunststoff bestehen. Als Werkstoff für die Rohre kommt beispielsweise Polypropylen in Betracht, wobei ein mineralischer Füllstoff (zum Beispiel Glasfaser) in den Werkstoff eingearbeitet sein kann. Denkbar ist aber auch, dass die Rohre aus Acrylnitril-Butadien-Styrol (ABS) bestehen, welches ein Werkstoff mit einer hohen Oberflächenhärte und guter Schlagfestigkeit ist.

Die beiden Rohre 2 und 3 sind an ihren jeweiligen Endabschnitten 4 und 5 derart ausgeformt, dass sie nach Art einer Muffen- bzw. Steckmuffenverbindung miteinander verbunden werden können. Bei ihrer Verbindung wird der Endabschnitt 4 des zweiten Rohres 3 in den Endabschnitt 5 des ersten Rohres 2 eingesteckt, wodurch die Muffenverbindung erzielt wird. Von ihrer Konstruktion her sind das erste Rohr 2 und das zweite Rohr 3 identisch ausgebildet, so dass die nachstehenden und auf das erste Rohr 2 bezogenen Ausführungen uneingeschränkt auch für das zweite Rohr 3 gelten und umgekehrt, d.h. Ausführungen zum zweiten Rohr 3 gelten uneingeschränkt auch für das erste Rohr 2. Der Fachmann wird erkennen, dass eine identische Ausbildung der Rohre zur Realisierung der Erfindung nicht zwingend erforderlich ist. Vielmehr dient die nachstehend beschriebene Rohr-RohrVerbindung lediglich der exemplarischen Darstellung der Erfindung, so dass auch eine Verbindung eines Rohres mit beispielsweise einem T-Stück denkbar ist, d.h. eine Verbindung von unterschiedlichen Fluidleitungsteilen bzw. Formstücken.

Zur Realisierung der Muffenverbindung weisen sowohl das erste Rohr 2 als auch das zweite Rohr 3 jeweils einen ersten Endabschnitt 4 auf, der als Spitzende ausgebildet ist. Ein zweiter Endabschnitt 5 der Rohre 2 und 3 liegt dem ersten Endabschnitt 4 gegenüber und ist muffenförmig ausgebildet, was beispielsweise im Rahmen des Fertigungsprozesses durch Aufweitung des zweiten Endabschnitts 5 erfolgen kann. Alternativ ist es auch denkbar, dass auf den zweiten Endabschnitt 5 ein Muffenelement auf das jeweilige Rohr 2 und 3 aufgeschoben und dort fixiert ist.

In dem dargestellten Ausführungsbeispiel ist der Innendurchmesser der jeweiligen muffenförmigen Endabschnitte 5 der Rohre 2 und 3 geringfügig größer bemessen als der Außendurchmesser der Rohre 2 und 3. Zur Erweiterung auf diesen geringfügig größeren Innendurchmesser umfasst der jeweilige Endabschnitt 5 einen Übergangsbereich 6, an dem in Zusammenbauanordnung der Rohrverbindung 1 die Stirnfläche des ersten Endabschnitts 4 des zweiten Rohres 3 anliegt. Somit weist der zweite Endabschnitt 5 des ersten Rohres 2 eine konische oder stufen- bzw. schulterförmige Erweiterung in Form des Übergangsbereiches 6 zur Aufnahme des ersten Endabschnitts 4 des zweiten Rohres 3 auf. Damit der erste Endabschnitt 4 leichter in den muffenförmigen Endabschnitt 5 einsteckbar bzw. einschiebbar ist, kann der erste Endabschnitt 4 leicht abgeschrägt ausgebildet sein.

Die Dichtung zwischen dem ersten Rohr 2 und dem zweiten Rohr 3 erfolgt durch ein in den Figuren nicht näher dargestelltes Dichtungselement, das in eine in dem muffenförmig ausgebildeten Endabschnitt 5 ausgebildete Umfangs- oder Ringsicke eingelegt ist. Das Dichtungselement, welches elastisch ausgebildet ist, legt sich unter Verformung nach dem Einschubvorgang des zweiten Rohres 3 in das erste Rohr 2 dichtend einerseits an den als Spitzende ausgebildeten Endabschnitt 4 des eingesteckten Rohres 3 bzw. an dessen Außenwandung 7 an und drückt sich andererseits in die in dem muffenförmigen Endabschnitt 5 ausgeformte Umfangs- oder Ringsicke ein. Als elastisches Dichtungselement können ein O-Ring, eine Lippendichtung, eine T-förmige Profildichtung oder dergleichen dienen, die in der innenseitig verlaufenden Nut bzw. Ringsicke, die in dem muffenförmigen Endabschnitt 5 ausgebildet ist, eingesetzt sind und bei Einschieben des Spitzendes 4 des zu verbindenden Rohres 3 gegen dessen Außenwandung 7 zum Anliegen kommen und dort zusammengepresst werden.

Der muffenförmig ausgebildete Endabschnitt 5 der jeweiligen Rohre 2 und 3 weist ferner einen an der Stirnseite und radial außen auf der Außenwandung 7 liegend ausgebildeten Vorsprung 15 auf, der in dem dargestellten Ausführungsbeispiel in Form eines Kragens umfangsmäßig rundum laufend ausgebildet ist.

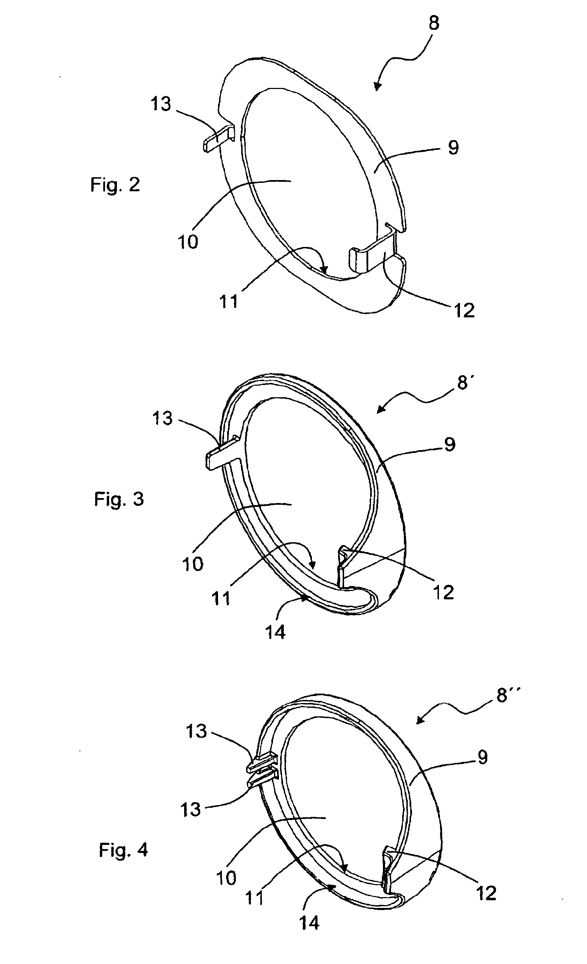

Um eine zugfeste axiale Verbindung von erstem und zweitem Rohr 2, 3 zu gewährleisten ist erfindungsgemäß eine Sicherungsvorrichtung 8 vorgesehen, so dass sich die Rohrverbindung 1 nach Art einer Muffenverbindung bei Zugbelastungen nicht selbsttätig auseinanderziehen kann. Die in den Figuren 1 und 5 bis 8 dargestellte Sicherungsvorrichtung 8 ist gemäß einer ersten Ausführungsform im Detail in Figur 2 dargestellt. Bei dieser ersten Ausführungsform weist die Sicherungsvorrichtung 8 einen ringförmig oder ringartig ausgebildeten Klemmkörper 9 mit einer Durchgangsöffnung 10 auf. Es ist jedoch nicht erforderlich, dass der Klemmkörper 9 ringförmig ausgebildet ist. Wichtig für seine Funktion ist lediglich die an den Außendurchmesser der Rohre 2 und 3 angepasste Durchgangsöffnung 10, deren Durchmesser unwesentlich bzw. geringfügig größer sein muss als der Außendurchmesser der Rohre 2 und 3. Beispielsweise würde der Innendurchmesser der Durchgangsöffnung 10 bei einem Rohr von 80 mm Durchmesser ungefähr 80,5 mm betragen, wenn eine Toleranz von ca. 0,4 mm beim Rohrdurchmesser berücksichtigt würde. Der Innendurchmesser der Durchgangsöffnung ist demnach um 0,1 % bis 0,5 % größer als der Außendurchmesser der Rohre 2 und 3.

Der in dem dargestellten Ausführungsbeispiel nach Art einer Platte ausgebildete flache Klemmkörper 9 umfasst die Durchgangsöffnung 10, die somit eine an den Außendurchmesser der beiden Rohre 2 und 3 angepasste Innenkontur 11 mit einem im Vergleich zum Außendurchmesser der Rohre 2 und 3 um 0,1% bis 0,5% größeren Innendurchmesser zum Einschieben eines der Rohre aufweist. Es sei angemerkt, dass bei Rohren, deren Durchmesser größer als 80 mm ist, der vorstehend genannte Wert von 0,1 % unterschritten wird und maßgebend von der Systemgröße, d.h. dem Rohrdurchmesser, abhängig ist. Die Form der Durchgangsöffnung 10 sowie der Innenkontur 11 des Klemmkörpers 9 ist daher so bemessen, dass der Innendurchmesser der Durchgangsöffnung 10 geringfügig größer ist als der Außendurchmesser der Rohre 2 und 3. Dies ermöglicht es, dass zur Montage der Sicherungsvorrichtung 8 das zweite Rohr 3 gerade noch ohne einen spürbaren Reibungswiderstand in die Durchgangsöffnung 10 eingeschoben werden kann bzw. dass zur Montage die Sicherungsvorrichtung 8 über die Außenwandung 7 des Rohres 3 schiebbar ist.

Der Klemmkörper 9 umfasst ferner ein Axialhalteelement bzw. Halteelement 12. Das Halteelement 12 ist hakenförmig ausgebildet, d.h. es weist einen sich in axialer Richtung der Rohre 2 bzw. 3 erstreckenden Stegabschnitt auf, an dem sich ein zu diesem Stegabschnitt abgewinkelter Abschnitt anschließt. Auf der dem Halteelement 12 radial betrachtet gegenüberliegenden Seite des Klemmkörpers 9 ist ein Abstandshalter 13 angeformt, der stegförmig ausgebildet ist und sich ebenfalls wie das Halteelement 12 in axialer Richtung erstreckt. Wie in den Figuren zu sehen ist, erstrecken sich das Halteelement 12 und der Abstandshalter 13 in die gleiche axiale Richtung. Wie ferner aus der Figur 1 ersichtlich ist, ist die axiale Länge bzw_{.} Erstreckung L1 des hakenförmig ausgebildeten Halteelements 12 größer als die axiale Länge bzw. Erstreckung L2 des stegförmig ausgebildeten Abstandshalters 13. Die erste Ausführungsform der Sicherungsvorrichtung 8 besteht aus einem metallischen Material, wobei die Innenkontur 11 der Durchgangsöffnung 10 scharfkantig ausgebildet ist.

Die Figuren 3 und 4 zeigen eine zweite bzw. dritte Ausführungsform einer Sicherungsvorrichtung 8', 8". Die zweite Ausführungsform der Sicherungsvorrichtung 8' weist ebenfalls ein hakenförmig ausgebildetes Haltelement 12 und einen Abstandshalter 13 auf, die auf sich im Wesentlichen radial gegenüberliegenden Seiten des Klemmkörpers 9 angeordnet sind und sich in die gleiche axiale Richtung erstrecken. Im Unterschied zu der in Figur 2 dargestellten ersten Ausführungsform der Sicherungsvorrichtung 8 besteht die in der Figur 3 dargestellte Sicherungsvorrichtung 8' aus einem Kunststoffmaterial. Hierbei ist es zweckmäßig, dass die Innenkontur 11 der Durchgangsöffnung 10 als Reibfläche ausgebildet oder mit einem als Reibfläche ausgebildeten Bauteil versehen ist, um die Klemm- und Haftwirkung zwischen der Sicherungsvorrichtung 8' und der Außenwandung 7 des zweiten Rohres 3 zu unterstützen und zu fördern. Ein weiterer Unterschied zwischen den beiden Ausführungsformen der Sicherungsvorrichtung 8 und 8' besteht darin, dass der Klemmkörper 9 der Sicherungsvorrichtung 8' einen radial außen liegend umlaufenden Steg 14 aufweist. Dieser um den Außenumfang des Klemmkörpers 10 rundum laufende Steg 14 weist annähernd die doppelte Breite in axialer Richtung im Vergleich zur Breite des eigentlichen Klemmkörpers 10 auf. Jedoch ist auch bei der zweiten Ausführungsform die axiale Länge bzw. Erstreckung L1 des hakenförmig ausgebildeten Halteelements 12 größer als die axiale Länge bzw. Erstreckung L2 des stegförmig ausgebildeten Abstandshalters 13.

Die in der Figur 4 dargestellte dritte Ausführungsform einer Sicherungsvorrichtung 8" unterscheidet sich von der zweiten Ausführungsform dadurch, dass anstelle eines Abstandshalters nun zwei Abstandshalter 13 im Wesentlichen auf der radial gegenüberliegenden Seiten des Halteelements 12 angeordnet sind. Die Ausgestaltung mit zwei Abstandshaltern 12 erhöht die Stabilität der Sicherungsvorrichtung 8" in der Zusammenbauanordnung gegen ein Abgleiten von dem auf dem Endabschnitt 5 ausgebildeten Vorsprung 15.

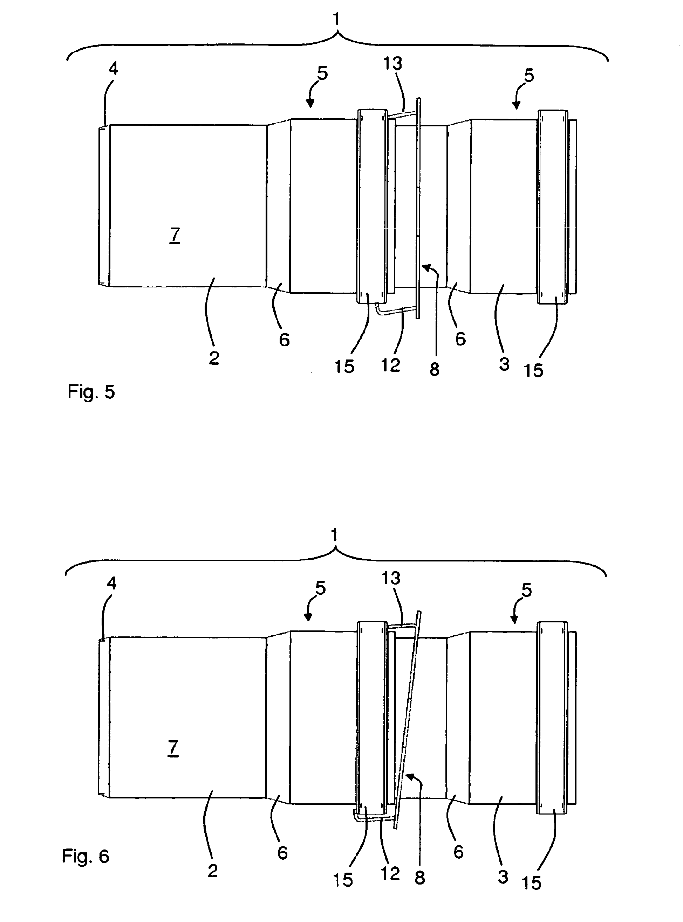

Nachstehend wird mit Bezug auf die Figuren 1 und 5 bis 8 die Montage der erfindungsgemäßen Rohrverbindung 1 näher erläutert. Bevor das zweite Rohr 3 mit dem als Spitzende ausgebildeten Endabschnitt 4 in den muffenförmig ausgebildeten Endabschnitt 5 des ersten Rohres 2 eingeschoben wird, wird der Klemmkörper 10 mit dem Endabschnitt 4 voran über die Außenwandung 7 des zweiten Rohres 3 geschoben. Anschließend wird der Endabschnitt 4 des zweiten Rohres in den muffenförmigen Endabschnitt 5 des ersten Rohres 2 eingesteckt. Im Anschluss daran wird - wie in Figur 5 zu erkennen ist - die Sicherungsvorrichtung 8 auf dem zweiten Rohr 3 solange in Richtung des Endabschnitts 5 des ersten Rohres 2 bewegt und geschoben, bis der Abstandshalter 13 der Sicherungsvorrichtung 8 sich auf den an der Stirnseite des Endabschnitts 5 kragenförmig ausgebildeten Vorsprung 15 des ersten Rohres 2 abstützt. Der stegförmig ausgebildete Abstandshalter 13 liegt somit an der Stirnseite des Vorsprungs 15 des ersten Rohres 2 an. Bei der Verschiebebewegung der Sicherungsvorrichtung 8 auf der Außenwandung 7 des zweiten Rohres 3 nimmt die Sicherungsvorrichtung 8 eine im Wesentlichen senkrechte Position zur axialen Richtung des Rohres 3 ein, so dass infolge des geringfügig größeren Innendurchmessers der Durchgangsöffnung 10 die Sicherungsvorrichtung 8 ohne merklichen Widerstand auf der Außenwandung 7 des zweiten Rohres 3 verschiebbar ist. Zur Sicherung der Rohrverbindung 1, d.h. der Verbindung von erstem Rohr 2 und zweitem Rohr 3, wird das hakenförmig ausgebildete Halteelement 12 der Sicherungsvorrichtung 8 über den Vorsprung 15 des ersten Rohres 2 geschoben und hintergreift den Vorsprung 15. Dies entspricht der in Figur 6 gezeigten Zusammenbauposition, in welcher die Sicherungsvorrichtung 8 nun nicht mehr senkrecht zur axialen Richtung der Rohre auf der Außenwandung 7 des zweiten Rohres 3 angeordnet ist, sondern schief oder schräg verkantet auf dem zweiten Rohr 3 anliegt, so dass die Innenkontur 11 der Durchgangsöffnung 10 der Sicherungsvorrichtung 8 eng und formschlüssig an der Außenwandung 7 des zweiten Rohres 3 spaltfrei anliegt. Die axiale Breite des Vorsprungs 15 und die axialen Längen L1 und L2 des hakenförmigen Halteelements 12 bzw. des Abstandshalters 13 sind derart bemessen, dass in Zusammenbauanordnung der Rohrverbindung bzw. Fluidleitungsverbindung 1 die Sicherungsvorrichtung 8 in einem Winkel von etwa 9° zur senkrecht zur Rohrachse verlaufenden Achse verkantet bzw. verklemmt auf der Außenwandung 7 des zweiten Rohres 3 angeordnet ist. Üblicherweise wird ein Winkel von kleiner als 10° bevorzugt, wobei der Winkel üblicherweise zwischen 5° und 10° liegt. Hierbei ist die axiale Breite des Vorsprungs 15 größer als der Betrag der Differenz der axialen Längen bzw. Erstreckungen L1 und L2. In Zusammenbauposition hintergreift das Halteelement 12 den Vorsprung 15, wobei der Abstandshalter 13 für eine Vorklemmung der Sicherungsvorrichtung 8 auf der Außenwandung 7 des zweiten Rohres 3 sorgt. Sollte nun eine Zugkraft auf die Rohrverbindung 1 wirken, so würden die beiden Rohre 2 und 3 versuchen, sich voneinander weg zu bewegen. Aufgrund der Vorklemmung der Innenkontur 10 auf der Außenwandung 7 des zweiten Rohres 3 kann sich bei einer derartigen Bewegung die Sicherungsvorrichtung 8 nur auf Seite des Abstandshalters 13 von dem ersten Rohr 12 wegbewegen, was aber zu einer Vergrößerung des Klemmwinkels und damit zu einer Erhöhung der Verklemmung bzw. Verkantung auf dem zweiten Rohr 3 führt und damit eine Bewegung des zweiten Rohres 3 unterbindet. Wichtig hierbei ist die Ausbildung der Innenkontur 11 der Durchgangsöffnung 10, damit diese kein Herausgleiten des zweiten Rohres 3 aus der Durchgangsöffnung 10 ermöglicht. Daher ist die Innenkontur entweder scharfkantig oder als Reibfläche ausgebildet.

Der Vorsprung 15 des muffenförmigen Endabschnitts 5 muss nicht zwingend als umfangsmäßig umlaufender Kragen ausgebildet sein. Alternativ ist es denkbar, dass der Endabschnitt 5 zwei Vorsprünge aufweist, die auf sich radial gegenüberliegenden Seiten des Endabschnitts 5 ausgebildet und zu der Anordnung von Halteelement 12 und Abstandshalter 13 korrespondierend angeordnet sind. Wichtig ist hierbei lediglich, dass sich der Abstandshalter an dem ersten Rohr 2 abstützen kann und dass das Halteelement 12 mit dem ersten Rohr 2 in Eingriff bringbar ist, um ein Auseinandergleiten der beiden Rohre 2 und 3 zu verhindern.

Durch die Schrägstellung der Sicherungsvorrichtung 8 im montierten Zustand bzw. in Zusammenbauposition der Rohrverbindung 1 wird eine Verkantung der Innenkontur 11 des Klemmkörpers 9 auf dem zweiten Rohr 3 erreicht, d.h. die Sicherungsvorrichtung 8 weist eine gewisse Vorklemmung auf, sofern keine Zugkraft auf die Rohrverbindung 1 wirkt. Diese Vorklemmung bewirkt, dass sich die Sicherungsvorrichtung 8 beim etwaigen Auseinandergleiten der Rohrverbindung 1 immer weiter verkantet und somit letztendlich eine Art Selbsthemmung eintritt, die einen durch Reibung verursachten Widerstand gegen ein Verrutschen oder ein Verdrehen der an der Innenkontur 11 anliegenden Außenwandung 7 des zweiten Rohres 3 erzeugt. Diese Selbsthemmung wird durch den Winkel der Verklemmung bzw. Verkantung, die Oberflächenrauhigkeit der Innenkontur 11 und der Werkstoffpaarung von Sicherungsvorrichtung 8 und Rohr 3 beeinflusst.

Üblicherweise handelt es sich bei den Rohren 2 und 3 um Kunststoffrohre, so dass sich die Sicherungsvorrichtung 8 bei einer scharfkantigen Ausbildung der Innenkontur 11 der Durchgangsöffnung 10 leicht in das Kunststoffmaterial der Rohre 2 und 3 beim Verklemmen einschneiden und damit die Klemmwirkung erhöht wird. Dies gilt für den Fall einer metallischen Ausbildung der Sicherungsvorrichtung 8.

Für den Fall, dass die Sicherungsvorrichtung 8' bzw. 8" aus einem Kunststoffmaterial hergestellt ist, sorgt die als Reibfläche ausgebildete Innenkontur 11 der Durchgangsöffnung 10 für die notwendige Verklemmung im Fall, dass sich beide Rohre unter Zugkrafteinwirkung auseinander bewegen. Um in diesem Fall die Verklemmung der Sicherungsvorrichtung 8' zu gewährleisten, weist der Klemmkörper 9 den radial außen liegend umlaufenden Steg 14 auf, welcher die Stabilität der aus Kunststoff bestehenden Sicherungsvorrichtung 8' erhöht. Dadurch wird ein Umklappen oder Abrollen der Sicherungsvorrichtung 8', 8" bzw. des Klemmkörpers 9 auf der Außenwandung 7 des zweiten Rohres 3 im Fall einer auf die Rohrverbindung 1 wirkenden Zugkraft verhindert. Zu berücksichtigen ist, dass bei hohen Abgastemperaturen Metallrohre verwendet werden, so dass von einer Verwendung von Sicherungsvorrichtungen aus Kunststoff abzusehen ist, da diese sich unter dem Temperatureinfluss erweichen würden. Dadurch bestünde die Gefahr, dass die Sicherungsvorrichtung aus Kunststoff nicht hinreichend Halt auf einer Metalloberfläche des Rohres finden würde und aufgrund der fehlenden Haftreibung abgleiten könnte. Daher wird bei hohen Abgastemperaturen eine metallische Ausbildung der Sicherungsvorrichtung bevorzugt.

Durch die vorstehend beschriebene Erfindung ist es möglich, dass eine axiale zugfeste Rohrverbindung zeitsparend von Hand ohne Verwendung eines Werkzeuges erfolgen kann. Es besteht bei dieser Art von Rohrverbindung kein Einfluss des Monteurs auf die Funktionalität der Rohrverbindung, da keine Spannschrauben, Schellen und dergleichen angezogen werden müssen. Darüber hinaus gestattet die erfindungsgemäße Rohrverbindung eine einfache optische Kontrolle der korrekten Montage der Sicherungsvorrichtung.

Obgleich in dem Ausführungsbeispiel der Figuren 1 und 5 bis 8 die Sicherungsvorrichtung 8 der ersten Ausführungsform verwendet wird, versteht es sich, dass die Rohrverbindung ebenso die Sicherungsvorrichtung 8' gemäß der zweiten Ausführungsform aufweisen kann, um eine axiale zugfeste Verbindung zwischen dem ersten und zweiten Rohr zu realisieren.

## Patentansprüche

1. Muffenverbindung, die ein erstes Fluidleitungsteil (2) mit einem muffenförmigen Endabschnitt (5), ein zweites Fluidleitungsteil (3) mit einem als Spitzende ausgebildeten Endabschnitt (4) und eine Sicherungsvorrichtung (8, 8', 8'') aufweist,
wobei der als Spitzende ausgebildete Endabschnitt (4) des zweiten Fluidleitungsteils (3) in den muffenförmigen Endabschnitt (5) des ersten Fluidleitungsteils (2) einsteckbar ist, und der muffenförmige Endabschnitt (5) des ersten Fluidleitungsteils (2) an seiner Stirnseite wenigstens einen umfangsmäßig zumindest abschnittsweise ausgebildeten kragenförmigen Vorsprung (15) aufweist,
wobei die Sicherungsvorrichtung (8, 8', 8'') einen in radialer Richtung ringförmig ausgebildeten Klemmkörper (9) mit einer Durchgangsöffnung (10) umfasst, die eine an den Außendurchmesser des zweiten Fluidleitungsteils (3) angepasste Innenkontur (11) zum Einschieben des zweiten Fluidleitungsteils (3) aufweist,
wobei in Zusammenbauanordnung der Muffenverbindung (1) der Endabschnitt (4) des zweiten Fluidleitungsteils (3) in den Endabschnitt (5) des ersten Fluidleitungsteils (2) eingesteckt ist und die Sicherungsvorrichtung (8, 8', 8'') über die Außenwandung (7) des zweiten Fluidleitungsteils (3) geschoben und in Nähe des muffenförmigen Endabschnitts (5) des ersten Fluidleitungsteils (2) angeordnet ist,
wobei an dem ringförmig ausgebildeten Klemmkörper (9) wenigstens ein sich in axialer Richtung erstreckendes und hakenförmig ausgebildetes Halteelement (12) zum Hintergreifen des auf dem Endabschnitt (5) des ersten Fluidleitungsteils (2) ausgebildeten kragenförmigen Vorsprungs (15) angeformt ist, wobei das wenigstens eine Halteelement (12) in Zusammenbauposition der Muffenverbindung (1) den kragenförmigen Vorsprung (15) derart hintergreift, dass der ringförmig ausgebildete Klemmkörper (9) abweichend von einer senkrecht zur axialen Richtung weisenden, schiefen oder schrägen Stellung verkantet und formschlüssig an der Außenwandung (7) des zweiten Fluidleitungsteils (3) anliegt,
wobei an dem Klemmkörper (9) wenigstens ein stegförmig ausgebildeter und sich in axialer Richtung erstreckender Abstandshalter (13) angeformt ist, der in Zusammenbauposition der Muffenverbindung (1) den kragenförmigen Vorsprung (15) des muffenförmigen Endabschnitts (5) des ersten Fluidleitungsteils (2) abstützt, wobei das wenigstens eine Halteelement (12) und der wenigstens eine Abstandshalter (13) sich in die gleiche axiale Richtung erstrecken, und
wobei die axiale Breite des kragenförmigen Vorsprungs (15) größer ist als der Betrag der Differenz der axialen Längen (L1, L2) des wenigstens einen Halteelements (12) und des wenigstens einen Abstandshalters (13).

2. Muffenverbindung nach Anspruch 1, wobei die Innenkontur (11) der Durchgangsöffnung (10) scharfkantig oder als Reibfläche ausgebildet ist.

3. Muffenverbindung nach Anspruch 1 oder 2, wobei der Klemmkörper (9) einen radial außen liegend umlaufenden Steg (14) aufweist.

4. Muffenverbindung nach Anspruch 1, wobei der wenigstens eine Abstandshalter (13) im Wesentlichen auf der dem wenigstens einen Halteelement (12) radial gegenüberliegenden Seite des Klemmkörpers (9) angeformt ist.

5. Muffenverbindung nach einem der Ansprüche 1 bis 4, wobei die axiale Länge (L1) des wenigstens einen hakenförmig ausgebildeten Halteelements (12) größer ist als die axiale Länge (L2) des wenigstens einen stegförmig ausgebildeten Abstandshalters (13).

6. Muffenverbindung nach einem der Ansprüche 1 bis 5, wobei in Zusammenbauanordnung der Muffenverbindung (1) die Sicherungsvorrichtung (8, 8', 8") in einem Winkel zwischen 5° und 10° zur senkrecht zur Axialrichtung der Muffenverbindung (1) verlaufenden Achse verkantet mit dem zweiten Fluidleitungsteil (3) auf dessen Außenwandung (7) angeordnet ist.

## Claims

1. A socket joint, which includes a first fluid conduit member (2) with a sleeve-shaped end section (5), a second fluid conduit member (3) with an end section (4) in the form of a spigot and a securing device (8, 8', 8") wherein the end section (4) in the form of a spigot of the second fluid conduit member (3) is insertable into the sleeve-shaped end section (5) of the first fluid conduit member (2) and the sleeve-shaped end section (5) of the first fluid conduit member (2) has at its front end at least one peripheral projection (15), which is of collar shape, at least in sections, wherein the securing device (8_{'} 8', 8") includes a clamping body (9), which is of annular construction in the radial direction, with an opening (10), which has an internal contour matched to the external diameter of the second fluid conduit member (3) for insertion of the second fluid conduit member (3), wherein in the assembled condition of the socket joint (1) the end section (4) of the second fluid conduit member (3) is inserted into the end section (5) of the first fluid conduit member (2) and the securing device (8, 8', 8") is slid over the external wall (7) of the second fluid conduit member (3) and is disposed in the vicinity of the sleeve-shaped end section (5) of the first fluid conduit member (2), wherein formed on the annular clamping body (9) there is at least one hook-shaped retaining element (12) extending in the axial direction for engaging behind the collar-shaped projection (15) on the end section (5) of the first fluid conduit member (2), wherein the at least one retaining element (12) engages behind the collar-shaped projection (15) in the assembled position of the socket joint (1), such that the annular clamping body (9) engages the external wall (7) of the second fluid conduit member (3) in a form-fitting manner canted in a skewed or oblique position differing from a position directed perpendicular to the axial direction, wherein formed on the clamping body (9) there is at least one web-shaped spacer (13), which extends in the axial direction and, in the assembled position of the socket joint (1), supports the collar-shaped projection (15) on the sleeve-shaped end section (5) of the first fluid conduit member (2), wherein the at least one retaining element (12) and the at least one spacer (13) extend in the same axial direction, and wherein the axial breadth of the collar-shaped projection (15) is greater than the amount of the difference in the axial lengths (L1, L2) of the at least one retaining element (12) of the at least one spacer (13).

2. A socket joint as claimed in claim 1, wherein the internal contour (11) of the opening (10) is sharp edged or constructed as a friction surface.

3. A socket connection as claimed in claim 1 or 2, wherein the clamping body (9) has a radially external peripheral web (14).

4. A socket joint as claim in claim 1, wherein the at least one spacer (13) is formed substantially on the side of the clamping body (9) radially opposite to the at least one retaining element (12).

5. A socket joint as claimed in one of claims 1 to 4, wherein the axial length (L1) of the at least one hook-shaped retaining element (12) is greater than the axial length (L2) of the at least one web-shaped spacer (13).

6. A socket joint as claimed in one of claims 1 to 5, wherein in the assembled condition of the socket joint (1), the securing device (8, 8', 8") is disposed tilted to the second fluid conduit member (3) on its outer wall (7) at an angle of between 5 ° and 10 ° to the axis extending perpendicular to the axial direction of the socket joint (1).

## Revendications

1. Assemblage à emboîtement, qui comprend un premier tronçon de conduite de fluide (2) comportant une section d'extrémité (5) en forme de manchon, un second tronçon de conduite de fluide (3) comportant une section d'extrémité (4) réalisée sous forme d'extrémité de bout mâle et un dispositif de sécurité (8, 8', 8''),
dans lequel la section d'extrémité (4), réalisée sous forme d'extrémité de bout mâle, du second tronçon de conduite de fluide (3) est emboîtable dans la section d'extrémité (5) en forme de manchon du premier tronçon de conduite de fluide (2), et la section d'extrémité (5) en forme de manchon du premier tronçon de conduite de fluide (2) comporte, à l'endroit de sa face frontale, au moins une saillie (15) en forme de collerette réalisée au moins par segments suivant la direction circonférentielle,
dans lequel le dispositif de sécurité (8, 8', 8'') comprend un corps de serrage (9) réalisé en forme d'anneau suivant la direction radiale et comportant une ouverture de passage (10) qui présente un contour intérieur (11) adapté au diamètre extérieur du second tronçon de conduite de fluide (3) et permettant l'introduction du second tronçon de conduite de fluide (3),
dans lequel, dans l'agencement assemblé de l'assemblage à emboîtement (1), la section d'extrémité (4) du second tronçon de conduite de fluide (3) est emboîtée dans la section d'extrémité (5) du premier tronçon de conduite de fluide (2) et le dispositif de sécurité (8, 8', 8'') est enfilé pardessus la paroi extérieure (7) du second tronçon de conduite de fluide (3) et est disposé au voisinage de la section d'extrémité (5) en forme de manchon du premier tronçon de conduite de fluide (2),
dans lequel, sur le corps de serrage (9) en forme d'anneau, il est réalisé au formage au moins un élément de retenue (12), s'étendant suivant la direction axiale et réalisé en forme de crochet, permettant un accrochage par derrière sur la saillie (15) en forme de collerette réalisée sur la section d'extrémité (5) du premier tronçon de conduite de fluide (2),
dans lequel, dans la position assemblée de l'assemblage à emboîtement (1), le ou les éléments de retenue (12) s'accrochent par derrière sur la saillie (15) en forme de collerette d'une manière telle que le corps de serrage (9) en forme d'anneau prend appui sur la paroi extérieure (7) du second tronçon de conduite de fluide (3) par complémentarité de formes et en étant coincé dans une position inclinée ou oblique, orientée en s'écartant d'une direction perpendiculaire à la direction axiale,
dans lequel, sur le corps de serrage (9), il est réalisé au formage un ou des éléments de maintien d'écartement (13), réalisés en forme de tige et s'étendant suivant la direction axiale, qui, dans la position assemblée de l'assemblage à emboîtement (1), servent d'appui à la saillie (15) en forme de collerette de la section d'extrémité (5) en forme de manchon du premier tronçon de conduite de fluide (2), le ou les éléments de retenue (12) et le ou les éléments de maintien d'écartement (13) s'étendant suivant la même direction axiale, et
dans lequel la largeur axiale de la saillie (15) en forme de collerette est plus grande que la valeur de la différence des longueurs axiales (L1, L2) du ou des éléments de retenue (12) et du ou des éléments de maintien d'écartement (13).

2. Assemblage à emboîtement suivant la revendication 1, dans lequel le contour intérieur (11) de l'ouverture de passage (10) est réalisé à arête vive ou sous forme de surface de frottement.

3. Assemblage à emboîtement suivant la revendication 1 ou 2, dans lequel le corps de serrage (9) comporte une nervure (14) s'étendant suivant le sens circonférentiel et disposée radialement vers l'extérieur.

4. Assemblage à emboîtement suivant la revendication 1, dans lequel le ou les éléments de maintien d'écartement (13) sont réalisés au formage essentiellement sur la face du corps de serrage (9) située radialement du côté opposé à l'élément ou aux éléments de retenue (12).

5. Assemblage à emboîtement suivant l'une des revendications 1 à 4, dans lequel la longueur axiale (L1) du ou des éléments de retenue (12) réalisés en forme de crochet est plus grande que la longueur axiale (L2) du ou des éléments de maintien d'écartement (13) réalisés en forme de tige.

6. Assemblage à emboîtement suivant l'une des revendications 1 à 5, dans lequel, dans l'agencement assemblé de l'assemblage à emboîtement (1), le dispositif de sécurité (8, 8', 8'') est coincé en biais, suivant un angle compris entre 5° et 10° vis-à-vis de l'axe s'étendant perpendiculairement à la direction axiale de l'assemblage à emboîtement (1), par rapport au second tronçon de conduite de fluide (3) et sur la paroi extérieure (7) de celui-ci.
